# EUROPÄISCHE PATENTANMELDUNG

(11) **EP 1 155 606 A2**
(43) Veröffentlichungstag der Anmeldung: **21.11.2001**
(21) Anmeldenummer: 01111387.5
(22) Anmeldetag: 10.05.2001
(51) Int. Cl.: A01C 15/00

(54) **Landwirtschaftliche Verteilmaschine**

(30) Priorität: 17.05.2000 DE 10024304
(71) Anmelder: Amazonen-Werke H. Dreyer GmbH & Co. KG, 49205 Hasbergen (DE)
(72) Erfinder: Wulkopf, Carsten, 27798 Hude (DE)

(57) **Zusammenfassung**

Landwirtschaftliche Verteilmaschine mit einem auf einem Rahmen eines Bodenbearbeitungsgerätes (7) aufgebauten Vorratsbehälter (1), der eine mittels eines Einstellelemententes einstellbare Dosiereinrichtung aufweist. Zwischen dem Rahmen des Bodenbearbeitungsgerätes (7) und dem Vorratsbehälter (1) ist zumindest ein Wiegesensor (11) angeordnet.

## Beschreibung

Die Erfindung betrifft eine landwirtschaftliche Verteilmaschine gemäß des Oberbegriffes des Patentanspruches 1. Eine derartige Verteilmaschine ist in der Praxis bekannt. Diese landwirtschaftliche Verteilmaschine ist als Fronttanksämaschine ausgebildet, wobei der Vorratsbehälter mittels Kuppelelementen auf den Rahmen eines Bodenbearbeitungsgerätes, hier Frontpacker aufgebaut ist. Dem Vorratsbehälter ist eine einstellbare Dosiereinrichtung zugeordnet, die über ein Einstellelement einstellbar ist. Dieses Einstellelement kann der Einstellhebel eines Einstellgetriebes oder ein elektrischer Antriebsmotor sein, welcher das Einstellelement verstellt oder selbst die Dosierwalze einer Dosiereinrichtung antreibt. Während des Ausbringvorganges ist bei dieser bekannten Maschine die Ausbringmenge nicht ermittelbar bzw. überprüfbar.

Der Erfindung liegt die Aufgabe zugrunde, eine einfache Vorrichtung vorzuschlagen, mittels welcher die ausgebrachte Materialmenge ermittelbar ist.

Diese Aufgabe wird erfindungsgemäß dadurch gelöst, dass zwischen dem Rahmen des Bodenbearbeitungsgerätes und dem Vorratsbehälter zumindest ein Wiegesensor angeordnet ist. Mittels dieses Wiegesensors kann das sich im Vorratsbehälter befindliche Gewicht ermittelt werden, so dass in aufeinanderfolgenden Zeitintervallen die tatsächliche Ausbringmenge ermittelbar ist.

Eine einfache Anordnung des Vorratsbehälters mit dem Wiegesensor auf dem Rahmen des Bodenbearbeitungsgerätes läßt sich dadurch verwirklichen, dass der Vorratsbehälter mittels zumindest eines Drehlagers an dem Rahmen des Bodenbearbeitungsgerätes angeordnet und der Wiegesensor das Gegenlager bildet.

Um in einfacher Weise erforderlichenfalls die Dosiereinrichtung entsprechend den vorgegebenen Sollwerten nachstellen bzw. nachregeln zu können, ist vorgesehen, dass der Wiegesensor mit einer elektronischen Auswerte- und Regeleinheit verbunden ist, die das Einstellelement der Dosiereinrichtung einstellt.

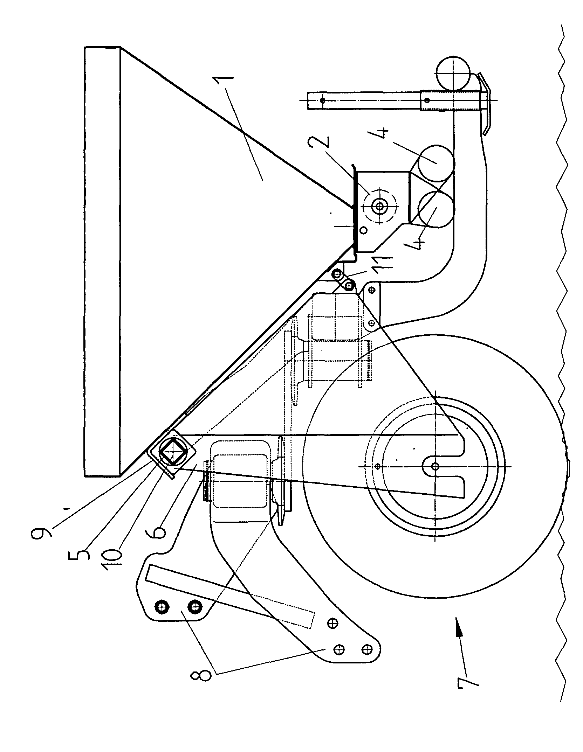

Weitere Einzelheiten der Erfindung sind der Beispielsbeschreibung und der Zeichnung zu entnehmen. Die Zeichnung zeigt
die landwirtschaftliche Verteilmaschine in Seitenansicht und in Prinzipdarstellung.

Die landwirtschaftliche Verteilmaschine weist den Vorratsbehälter 1, die Dosiereinrichtung 2 auf, die das sich im Vorratsbehälter 1 befindliche Material über eine Schleuse in eine mit einem Luftstrom beaufschlagten Förderleitung 4 einleitet. Die Förderleitung 4 fördert das Material zu einem nicht dargestellten Verteilerkopf, von dem aus das Material zu Ausbringelementen aufgeteilt wird. Der Vorratsbehälter 1 der Verteilmaschine ist mittels der Kuppelelemente 5 auf den Rahmen 6 eines als Frontpacker 7 ausgebildeten Bodenbearbeitungsgerätes aufgebaut. Der Rahmen 6 des Frontpackers 7 weist Kupplungselemente 8 auf, mittels welcher er an den Dreipunktkraftheber, der auf der Frontseite eines Ackerschleppers angeordnet ist, angebaut werden kann. Der Vorratsbehälterrahmen 9 ist über die beiden Drehlager 10 an dem Rahmen 6 des Bodenbearbeitungsgerätes 7 angebaut. Zwischen dem unteren Bereich des Vorratsbehälters 1 und dem Rahmen 6 des Bodenbearbeitungsgerätes 7 ist der Wiegesensor 11 angeordnet, der das Gegenlager zu dem Drehlager 10 bildet. Über diesen Wiegesensor 11 stützt sich der Vorratsbehälter 1 an dem Rahmen 6 des Bodenbearbeitungsgerätes 7 ab. Des weiteren ist an dem Rahmen 6 des Bodenbearbeitungsgerätes 7 ein nicht dargestelltes Sporenrad angeordnet. Im Bereich des Sporenrades ist ein Sensor angeordnet, der die Umdrehungen des Sporenrades zählt und hieraus in Verbindung mit einer Auswerteeinrichtung den zurückgelegten Weg ermittelt. Aus dem zurückgelegten Weg und der Arbeitsbreite der Verteilmaschine kann die bearbeitete Fläche ermittelt werden. Der Wiegesensor 11 ist als Drucksensor ausgebildet und mit einer elektronischen Auswerte- und Regeleinrichtung verbunden. Über die elektronische Auswerte-und Regeleinrichtung kann das Gewicht des sich im Vorratsbehälter befindlichen Materials ermittelt werden. Aufgrund der Ermittlung des Gewichtes in Zeitintervallen läßt sich die ausgebrachte Menge pro Flächeneinheit in Zusammenhang mit der Ermittlung der bearbeiteten Flächen ermitteln.

Die Dosiereinrichtung 2 wird mittels eines nicht dargestellten elektrischen Motors angetrieben. Es ist jedoch aus möglich, die Dosiereinrichtung über ein Regelgetriebe anzutreiben und einzustellen, wobei dann die Einstellung des Regelgetriebes mittels eines elektrischen Motors erfolgt. Dieser elektrische Antriebsmotor, der der Dosiereinrichtung zugeordnet ist, ist mit der elektronischen Auswert- und Regeleinrichtung verbunden, so dass entsprechend eines Soll- Istwertvergleiches der ausgebrachten Menge durch Ansteuerung des elektrischen Antriebsmotors die Einstellung der Dosiereinrichtung veränderbar ist, so dass die gewünschte Ausbringmenge jeweils eingeregelt werden kann.

**[Stand der Technik]**

## Patentansprüche

1. Landwirtschaftliche Verteilmaschine mit einem auf einem Rahmen eines Bodenbearbeitungsgerätes aufgebauten Vorratsbehälter, der eine mittels eines Einstellelemententes einstellbare Dosiereinrichtung aufweist, **dadurch gekennzeichnet, dass** zwischen dem Rahmen (6) des Bodenbearbeitungsgerätes (7) und dem Vorratsbehälter (1) zumindest ein Wiegesensor (11) angeordnet ist.

2. Verteilmaschine nach Anspruch 1, **dadurch gekennzeichnet, daß** der Wiegesensor (11) als Drucksensor ausgebildet ist.

3. Verteilmaschine nach Anspruch 1, **dadurch gekennzeichnet, dass** der Vorratsbehälter (1) mittels zumindest eines Drehlagers (10) an dem Rahmen (6) des Bodenbearbeitungsgerätes (7) angeordnet ist und der Wiegesensor (11) das Gegenlager bildet.

4. Verteilmaschine nach Anspruch 1, **dadurch gekennzeichnet, dass** der Wiegesensor (11) mit einer elektronischen Auswerte- und Regeleinheit verbunden ist, die das Einstellelement der Dosiereinrichtung (2) einstellt
